Europäisches Patentamt

European Patent Office

Office européen des brevets

(19)

(11) Publication number: **0 356 120**
**A2**

# EUROPEAN PATENT APPLICATION

(12)

(21) Application number: **89308297.4**

(22) Date of filing: **16.08.89**

(51) Int. Cl.⁵: **G 03 B 27/58**

(30) Priority: **26.08.88 JP 112648/88**
          **27.04.89 JP 108417/89**

(43) Date of publication of application:
**28.02.90 Bulletin 90/09**

(84) Designated Contracting States: **DE FR GB**

(71) Applicant: **SEIKO INSTRUMENTS INC.**
**31-1, Kameido 6-chome Koto-ku**
**Tokyo 136 (JP)**

(72) Inventor: **Horikiri, Keiichi**
**c/o Seiko Instruments Inc. 31-1, Kameido-6-chome**
**Koto-ku Tokyo (JP)**

(74) Representative: **Miller, Joseph et al**
**J. MILLER & CO. Lincoln House 296-302 High Holborn**
**London WC1V 7JH (GB)**

(54) **Sheet feeding device.**

(57) A sheet feeding device comprising housing means (28) for housing a stack of sheets (200,201); support means (21A,21B) which carry at least one suction member (10A,10B); and drive means (1,5,12,13,18,.20A,20B) for moving the support means (21A,21B) between a sheet adherence position (Figure 6b), in which the suction member or members (10A,10B) engage a portion of the topmost sheet (200) of the said stack and cause said portion to adhere by suction to the suction member or members (10A,10B), and a sheet release position (Figure 6f) in which the topmost sheet (200), which has been moved from the sheet adherence position (Figure 6b), is released from the suction member or members (10A,10B) so as to be delivered to a point of use characterised in that the support means (21A,21B) has at least one sheet contact portion (129) which is spaced from the suction member or members (10A,10B) and contacts the said topmost sheet (200) in the sheet adherence position (Figure 6b), the drive means (1,5,12,13,18,20A,20B), after moving the support means (21A,21B) into the sheet adherence position, then moving the support means (21A,21B) into a sheet pivoting position (Figure 6c) in which the said portion of the topmost sheet is pivoted about the contact portion or portions (129) so as to be moved away from the remaining sheets in the stack, the support means (21A, 21B) being thereafter moved into the sheet release position (Figure 6f).

FIG. 3

EP 0 356 120 A2

## Description

## SHEET FEEDING DEVICE

This invention relates to a sheet feeding device, e.g. for feeding an image-receiving sheet to an image recording apparatus.

US-A-4,399,290, US-A-4,440,846 and GB-A-2,223,860 (Mead Corporation) describe an image recording system. According to this system, a photosensitive layer comprising microcapsules containing a photosensitive composition in the internal phase is image-wise exposed to actinic radiation and subjected to a uniform rupturing force, whereby the microcapsules rupture and image-wise release the internal phase. An image-forming agent, such as a substantially colourless chromogenic material, is coated on an image-receiving sheet and is typically associated with the microcapsules such that, when the microcapsules rupture, the chromogenic material is able to image-wise react with a developer material and produce a colour image. Since this system can produce pixels of the same size as the size of a microcapsule, that is of the order of microns, a colour image is printed with extremely high resolution.

However, there have been problems such as the fact that, since developer is coated on the surface of the image-receiving sheet, the image-receiving sheet is liable to be scratched by a sheet feeding roller when it is taken out from a sheet tray, with the result that there can be peeling off of the developer material, which not only produces a deterioration of the picture image quality, but also causes simultaneous feeding of multiple image-receiving sheets (hereafter referred to as duplicate supply) because relative movement between the sheets is difficult due to considerable friction between sheets.

According to the present invention, there is therefore provided a sheet feeding device comprising housing means for housing a stack of sheets; support means which carry at least one suction member; and drive means for moving the support means between a sheet adherence position, in which the suction member or members engage a portion of the topmost sheet of the said stack and cause said portion to adhere by suction to the suction member or members, and a sheet release position in which the topmost sheet, which has been moved from the sheet adherence position is released from the suction member or members so as to be delivered to a point of use characterised in that the support means has at least one sheet contact portion which is spaced from the suction member or members and contacts the said topmost sheet in the sheet adherence position, the drive means, after moving the support means into the sheet adherence position, then moving the support means into a sheet pivoting position in which the said portion of the topmost sheet is pivoted about the contact portion or portions so as to be moved away from the remaining sheets in the stack, the support means being thereafter moved into the sheet release position.

Preferably, the drive means, after moving the support means into the sheet pivoting position and prior to moving it into the sheet release position, moves the support means into a sheet separation position in which a sheet separation force is applied to effect separation from the said topmost sheet of any surplus sheet which temporarily adheres thereto.

Preferably, in the sheet separation position, the topmost sheet is brought into engagement with one or more sheet separation members which cause bowing of the said topmost sheet so as to separate it from any surplus sheet.

The sheet separation member or members are preferably carried by a rotatable arm or arms which carry one roller of a pair of feed rollers, means being provided for rotating the said arm or arms so as to bring the pair of rollers together in the sheet release position so that the released sheet can be fed forwardly thereby and to separate the rollers in the other said positions.

Preferably, in the sheet release position, any said surplus sheet is engaged by a sheet return member so as to be moved back into the said stack.

The arrangement is also preferably such that, in the sheet release position, the sheet return member is moved by the said rotatable arm or arms or by means carried thereby so as to push any said surplus sheet back into the stack.

There are preferably means for directing a stream of air to the region in which the said topmost sheet is moved away from the remaining sheets in the stack so as to assist separation therebetween.

The drive means preferably comprises a motor whose drive is transmitted to the support means by way of a slipping clutch.

The said motor also preferably drives the said arm or arms by way of a slipping clutch.

The invention also comprises an image recording apparatus provided with the said sheet feeding device.

In its preferred form, the sheet feeding device is able to take out a sheet from the stack without damaging any developer on the sheet surface, and the sheet feeding device is also able to take out sheets one by one from the sheet tray without causing duplicate supply. The preferred sheet feeding device, moreover, is able to push a sheet that falls onto the wall of a sheet tray, into the sheet tray in order to store the sheet in the sheet tray.

The invention is illustrated, merely by way of example, in the accompanying drawings, in which:-

Figure 1 is a front view of a first embodiment of a sheet feeding device according to the present invention;

Figure 2 is a side view of the sheet feeding device shown in Figure 1;

Figure 3 is a perspective view showing a principal part of the sheet feeding device shown in Figure 1;

Figure 4 is a block diagram showing an embodiment of a control unit which may be used in the sheet feeding device of Figures 1-3;

Figure 5 is a flow chart showing the operation of the sheet feeding device of Figures 1-4;

Figures 6a to 6f are explanatory views showing the operation of the sheet feeding device of Figures 1-4;

Figure 7a and 7b are explanatory views illustrating the operation of taking out sheets without causing a duplicate supply thereof;

Figures 8a to 8d are perspective views showing principal portions of separation members which may be used for the sheet feeding device of the present invention;

Figure 9 is a perspective view of a sheet tray which may be used for the sheet feeding device of the present invention;

Figure 10 is a front view of a second embodiment of a sheet feeding device according to the present invention;

Figure 11 is a side view of the sheet feeding device shown in Figure 10; and

Figure 12 is a block diagram showing an example of an image recording apparatus which may be modified for use with a sheet feeding device according to the present invention.

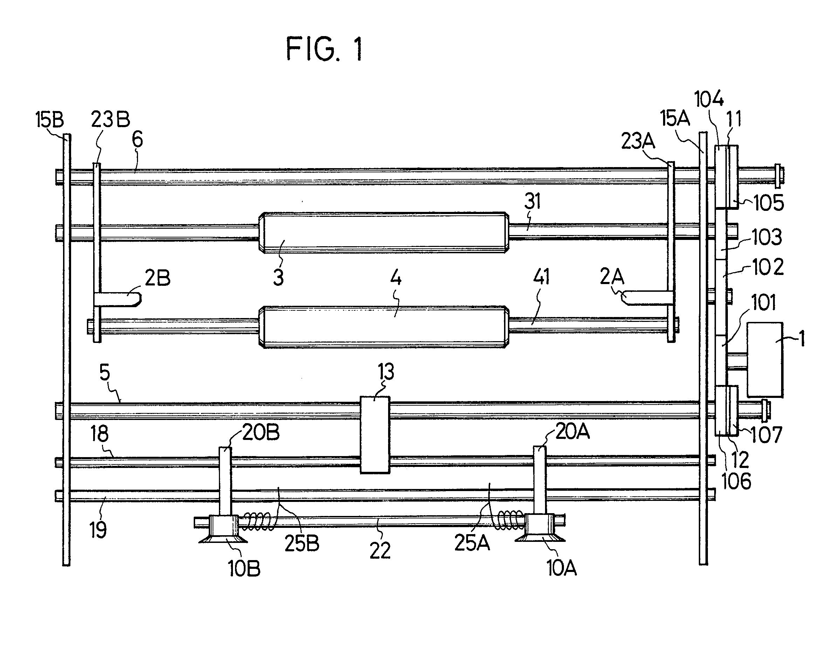

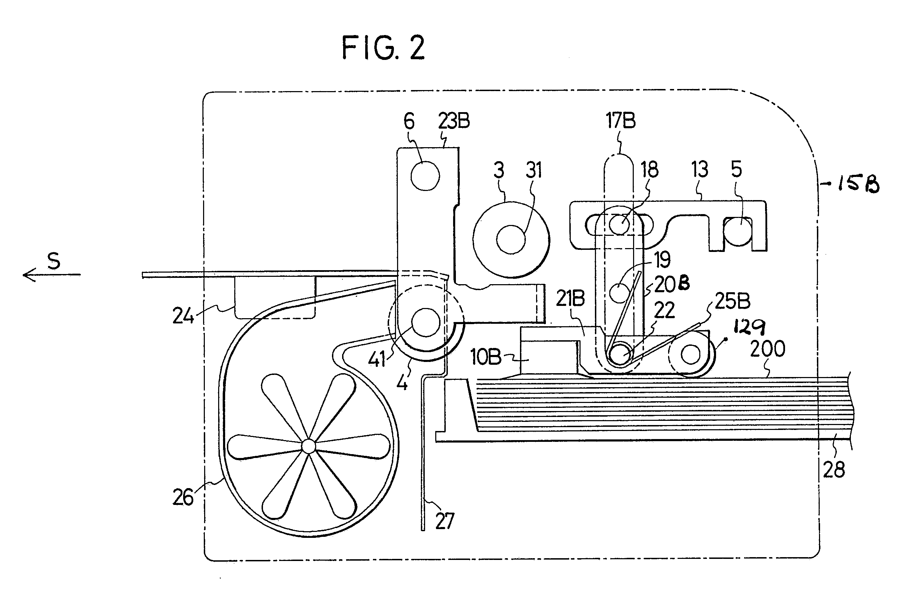

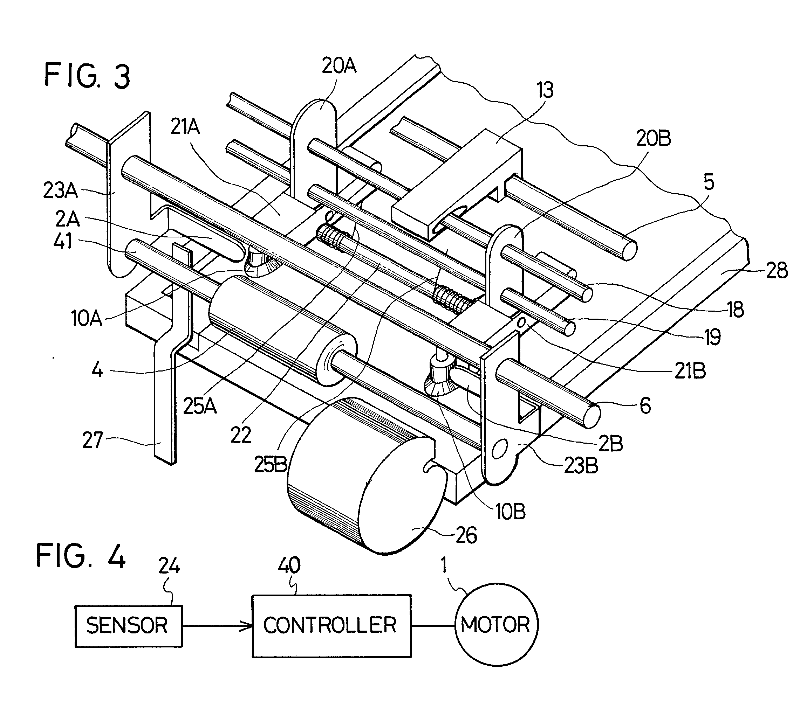

As indicated above, Figure 1 is a front view of a first embodiment of a sheet feeding device according to the present invention, Figure 2 being a side view thereof in which a side plate 15B is represented by a chain dotted line, and Figure 3 being a perspective view of the principal part of the sheet feeding apparatus shown in Figure 1.

In the apparatus shown in Figures 1-3, a motor 1 receives a signal from a controller 40 (Figure 4). The power generated by the motor 1 is transmitted through a motor pulley 101 and gears 102 and 103. A paper feed roller shaft 31 fixed to the gear 103 rotates with a paper feed roller 3 which is fixedly mounted on the paper feed roller shaft 31. The gear 103 is drivingly connected to a gear 104 which is rotatably mounted on a paper feed link shaft 6. A gear 105 is fixed to the paper feed link shaft 6. A slip seat or slipping clutch 11 is interposed between the gears 104 and 105 so that the power transmitted from the gear 104 is transmitted to the gear 105 through the slip seat 11 and rotates the paper feed link shaft 6. In the friction transmission means consisting of the gears 104, 105 and the slip seat 11, the slip seat 11 absorbs any excessive load when a load of a certain extent is applied thereto so that not all the power of the gear 104 is transmitted to the gear 105. Accordingly, it is possible to prevent excessive pressure-contact force of a pressure-contact roller 4 from acting on the uppermost image-receiving sheet 200 (Figure 2) in a stack thereof in a tray 28.

Arms 23A and 23B are fixed to the paper feed link shaft 6. A pressure-contact roller shaft 41 which is provided with the pressure-contact roller 4 is interposed between the arms 23A and 23B. Separation members 2A, 2B for separating duplicate supplied image-receiving sheets 200 are fixed to the arms 23A, 23B so as to extend axially of the pressure-contact roller 4.

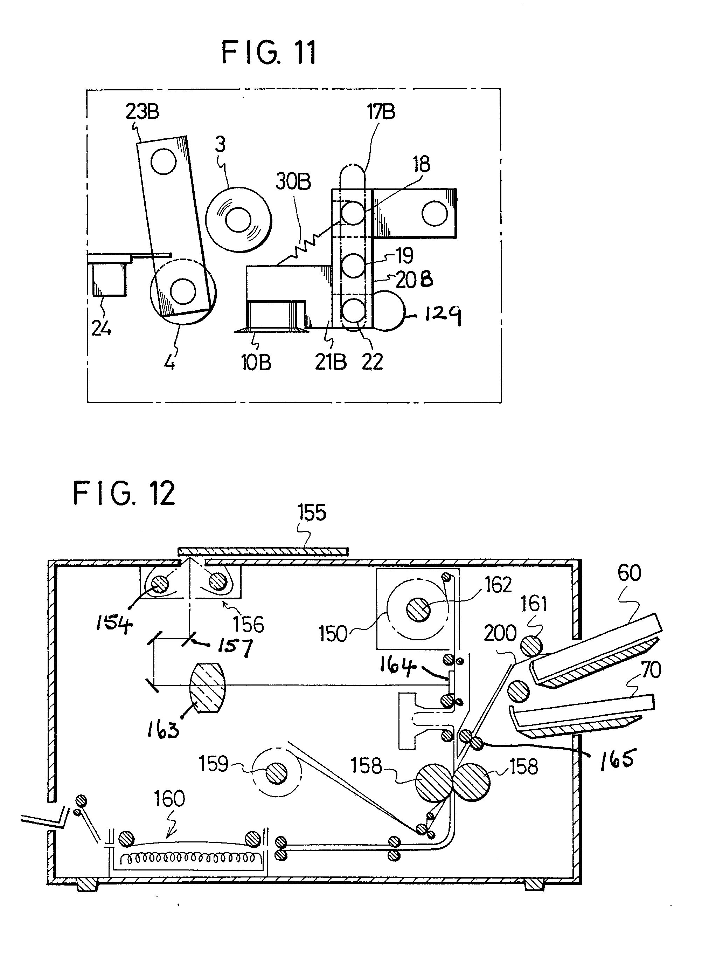

A paper sensor 24 (Figure 2) for sensing an imaging sheet 200 is disposed on the feed side of the stack of imaging sheets 200, i.e. the side on which it is fed by the paper feed roller 3 and the pressure-contact roller 4 into an image recording apparatus, e.g. that shown in Figure 12.

The motor pulley 101 is also mechanically connected to a gear 106. The gear 106 is rotatably mounted on a suction disc link shaft 5, a gear 107 being fixed to the shaft 5. Another slip seat or slipping clutch 12 is interposed between the gears 106 and 107 so that the power transmitted from the gear 106 is transmitted to the gear 107 through the slip seat 12 and rotates the suction disc link shaft 5. Since the friction transmission means consisting of the gears 106, 107 and the slip seat 12 is of the same construction as the friction transmission means consisting of the gears 104, 105 and slip seat 11, an explanation of it will be omitted.

A link 13 is fixed to the suction disc link shaft 5 and the rotary motion of the link shaft 5 is transmitted to the link 13. When the link 13 rotates about the axis of the suction disk link shaft 5, shafts 18 and 19 reciprocate up and down in elongated apertured portions 17B which are shown by a chain dotted line in Figure 2 and which are formed in side plates 15A, 15B.

Supports 20A, 20B are fixed to the shafts 18, 19 so as to be disposed on opposite sides of the link 13. Suction disc supporting blocks 21A, 21B, each of which is provided at one end with a suction disc 10A, 10B, are fixed to the supports 20A, 20B by a rotary shaft 22. Torsion coil springs 25A, 25B are mounted on the rotary shaft 22. One end of each spring 25A, 25B engages the rear end of a respective suction disc supporting block 21A, 21B, while the other end thereof engages the shaft 19. Each of the suction disc supporting blocks 21A, 21B is provided at its end remote from its suction disc 10A, 10B with a curved portion or with a roller 129 which is engageable in operation with the said uppermost sheet 200.

As shown in Figure 2, a fan 26 is disposed at a position where the air stream therefrom is blown to the image-receiving sheets 200 that are in operation sucked up by the suction discs 10A and 10B. A rectangular cross-section paper return member 27 is disposed so that one of its ends hooks onto or otherwise engages the pressure-contact roller shaft 41 while the other end thereof is fixed to a position not shown in the drawing.

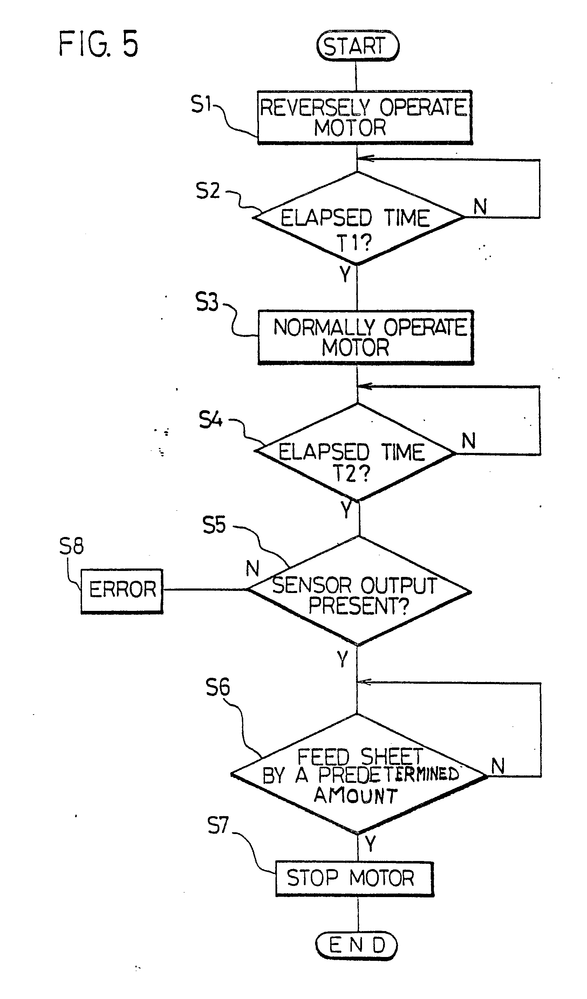

Figure 4 is a block diagram showing a control unit of the sheet feeding device of Figures 1-3. A controller 40 comprising a micro-computer is arranged to rotate the motor 1 forwardly and reversely at a predetermined interval upon receiving a signal from the paper sensor 24 on the basis indicated in the Figure 5 flowchart.

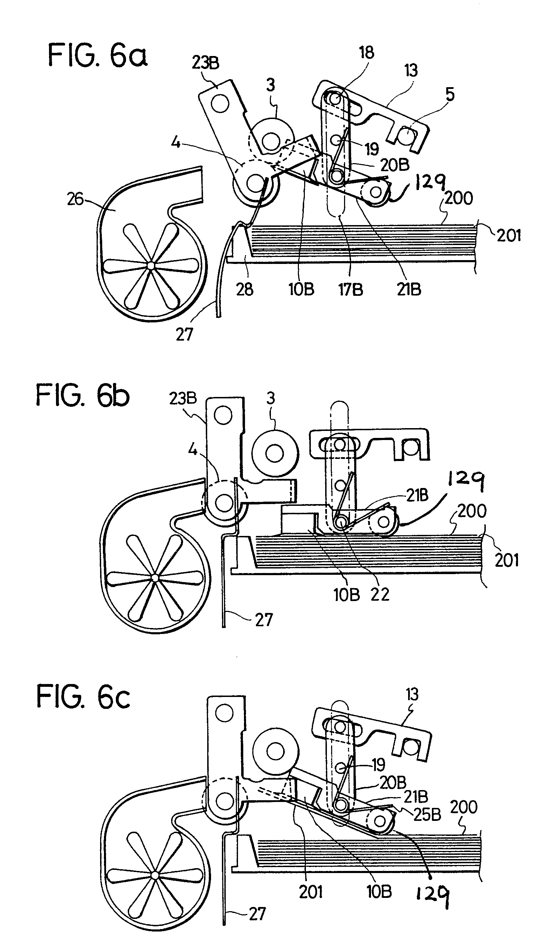

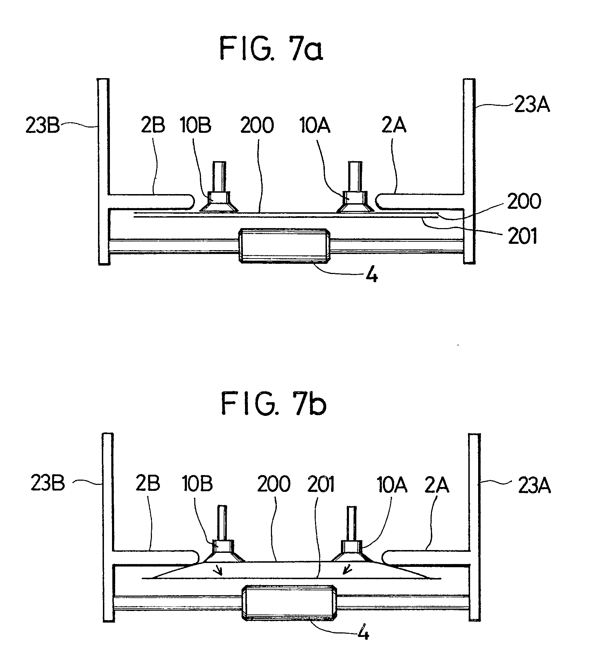

Next, the operation of the paper feeding device shown in Figures 1-4 will be described with reference to the flowchart shown in Figure 5 and with reference to Figures 6a to 6f and Figures 7a and 7b which show elevations of parts of the device in various stages of the operation.

Figure 6a shows the state after an image receiving sheet has been transferred into an image recording apparatus, such as one similar to that shown in Figure 12, by the paper feed roller 3 and the pressure-contact roller 4. When the apparatus is operated from this state, the motor 1 rotates reversely (step S1 in Figure 5) and the link shaft 5 and the link 13 rotate counter-clockwise as seen in Figure 6a through the friction transmission means comprising the gears 106, 107 and the slip seat 12. Since the shaft 18 is disposed in an elongated hole in the link 13 and in the elongated holes 17B of the side plates 15A, 15B, the shaft 18 moves down in the elongated holes 17B of the side plates 15A, 15B. As described already, the suction discs 10A, 10B, the rotary shaft 22 and the torsion coil springs 25A, 25B are coupled to the shaft 18. Accordingly, they also move down simultaneously. When they move down and the end or roller 129 of each suction disc supporting block 21A, 21B comes into contact with the surface of the topmost image-receiving sheet 200 as shown in the sheet adherence position of Figure 6b, the suction disc supporting blocks 21A, 21B rotate counter-clockwise with the rotary shaft 22 so that the suction discs 10A, 10B are brought into pressure contact with the surface of the image receiving sheet 200 and adheres to it by suction. The motor 1 keeps rotating reversely for a predetermined period T1 while the suction discs 10A, 10B are kept in pressure-contact with the image receiving sheet 200, but since its driving force is dissipated by the friction transmission mechanism comprising the gears 106, 107 and the slip seat 12, any excessive pressure-contact force does not act on the image receiving sheet 200. Subsequently, the pressure-contact roller 4 leaves the paper feed roller 3.

After the passage of the predetermined period T1 (step S2 in Figure 5), the motor 1 rotates normally, i.e. forwardly, as shown in the sheet pivoting position of Figures 6c and 7a and step S3 in Figure 5), and the supports 20A, 20B move up by reason of the link 13 rotating clockwise. Accordingly, the tips of the suction disc supporting blocks 21A, 21B which are provided with the suction discs 10A, 10B are lifted up by the torsion coil springs 25A, 25B, and an image-receiving sheet 200 is pivoted by the suction force of the suction disc 10, with the end or roller 129 of each suction disc supporting block 21A, 21B acting as a support point. That is to say, each of the suction discs 10A, 10B is disposed at one end of the respective disc supporting block 21A, 21B while the opposite end or roller 129 of the latter contacts the surface of the topmsot image-receiving sheet 200 so that the image-receiving sheet is lifted up by rotating the suction discs 10A, 10B around the points of contact between the ends or rollers 129 at the said opposite ends of the disc supporting blocks 21A, 21B and the surface of the topmost image-receiving sheet 200. This pivoting operation which moves the portion of the topmost sheet 200 engaged by the suction discs 10A, 10B away from the remaining sheets in the stack, is complete when the suction disc blocks 21A, 21B come into contact with the supports 20A, 20B.

It will be assumed in this instance that another or surplus image receiving sheet 201 which overlaps the image-receiving sheet 200 supported by the suction discs 10A, 10B comes into close contact with the image-receiving sheet 200 due to the moisture of the developer coated on the surface or the like and is lifted up together therewith. In other words, the image-receiving sheet 201 is not supported by the suction discs 10A, 10B.

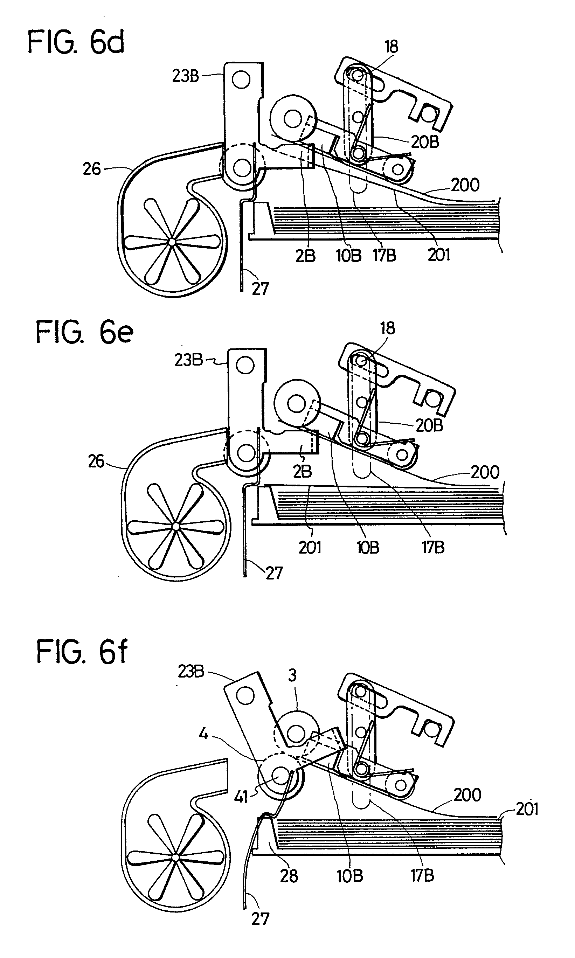

As shown in the sheet separation position of Figures 6d and 7b, when the supports 20A and 20B rise further and the shaft 18 reaches the upper end of the elongated holes 17B, the driving force is dissipated by the friction transmission means comprising the gears 106, 107 and the slip seat 12 and, at this time, both ends of the image-receiving sheets 200 are pushed down by the separation members 2A, 2B formed on the arms 23A, 23B so that both the image-receiving sheets 200, 201 are bowed or curved and the image receiving sheet 201 which is attached to the back of the image-receiving sheet 200 is separated from it due to the "stiffness" of the sheets. In other words, when the image-receiving sheets 200, 201 are curved, the force that attempts to keep the image-receiving sheet 201 in its original and normal upright state acts on the image-receiving sheet 201 which is not held with respect to the image receiving sheet 200 which is held by the suction discs 10A, 10B with the result that the image-receiving sheet 201 is separated from the image-receiving sheet 200. As the separation members 2A, 2B push down the image-receiving sheets 200, 201, the image-receiving sheets 200, 201 are separated sufficiently, but their separation can be promoted by using the separation fan 26 to blow air between the image-receiving sheet 200 which is picked up and the image-receiving sheet 201 which is attached to its back.

The same effect can also be obtained by the use of means other than the separation fan for blowing air to the image receiving sheets 200, 201.

The separated image-receiving sheet 201 then falls onto the sheet tray 28 as shown in Figure 6e and is at this stage not part of the stack of sheets in the sheet tray 28, as will be clearly seen in Figure 6e.

Subsequently, the image-receiving sheet 200 is released from the suction discs 10A, 10B and transferred into the image recording apparatus by the paper feed roller 3 and the pressure-contact roller 4 at the point of time when these rollers come into mutual contact as shown in the sheet release position of Figure 6f. At this time, the paper return member 27 deflects due to the rotary motion of the pressure-contact roller shaft 41 in the arms 23A, 23B, and the image-receiving sheet 201 placed on the upper surface of the sheet tray 28 due to the separating operation described above is returned by the paper return member 27 into the storage portion of the sheet tray 28. The motor 1 keeps rotating forwardly for a predetermined period T2 (step S4 in Figure 5), and its excess driving force is dissipated by the friction transmission mechanism comprising the gears 106, 107 and the slip seat 12.

When a signal indicating that the image-receiving sheet 200 has been transferred to the sensor 24 is outputted (step S5 in Figure 5), the controller 40 actuates the motor 1 until it reaches a predetermined number of revolutions and feeds the image-receiving sheet 200 to a predetermined position such as to a developing position (step S6 in Figure 5). After this, the controller 40 stops the motor 1 (step S7 in Figure 5).

On the other hand, when the motor 1 is rotated normally (i.e. forwardly) but the signal is not outputted from the sensor 24 (step S5 in Figure 5), the controller 40 sends a paper feed error signal to the image recording apparatus (step S8 in Figure 5).

Even when the delivery of the image-receiving sheets from the sheet tray 28 which stores the image-receiving sheets proceeds and the surface position of the topmost image-receiving sheet is lowered, the suction discs 10A, 10B are driven by the force determined by the friction transmission means comprising the gears 106, 107 and the slip seat 12. Accordingly, they are brought into pressure contact until a predetermined suction force is generated, irrespective of the height of the stack of image-receiving sheets 200 stored in the sheet tray 28.

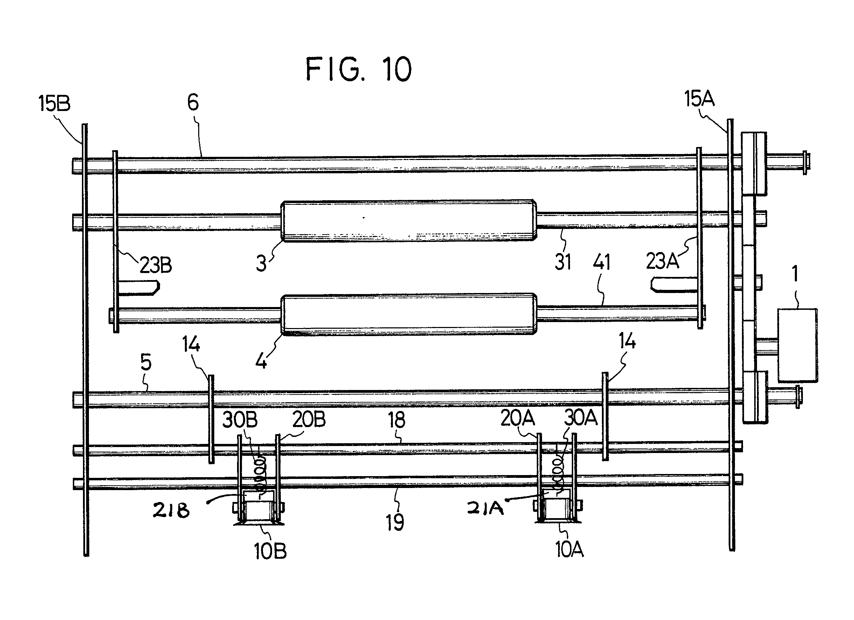

Figures 10 and 11 show another embodiment of a sheet feeding device according to the present invention. In Figures 10 and 11, there is shown an apparatus comprising a pulse motor 1 which is arranged to receive a signal from a controller 40 (Figures 4) and is coupled to a shaft 31 of a paper feed roller 3 and to a paper feed link shaft 6 through gears. A shaft 41 of a pressure-contact roller 4 is fixed to a pair of arms 23A, 23B that are fixed to the paper feed link shaft 6 connected to the pulse motor 1 through friction transmission means. A paper sensor 24 for sensing an image-receiving sheet is disposed on the delivery side of the two rollers 3 and 4.

The apparatus of Figures 10 and 11 comprises suction discs 10A, 10B. A pair of arms 14, which are fixed to a link shaft 5 which is drivingly connected to the motor 1 through a friction transmission means, are arranged to reciprocate shafts 18 and 19 which are mounted loosely in elongated apertured portions 17B in side plates 15A, 15B respectively. Supports 20A, 20B are fixed to the shafts 18 and 19, respectively. Suction discs supporting blocks 21A, 21B, which are provided with the said suction discs 10A, 10B are fixed to the supports 20A, 20B by a rotary shaft 22. Tension springs 30A, 30B are provided such that one end of each such spring supports the tip of the respective suction disc supporting block 21A, 21B and the other end engages the shaft 18.

The operation of the second embodiment is the same as that of the first embodiment.

Figure 12 is a block diagram showing an example of an image recording apparatus which may be modified for use with the sheet feeding device according to the present invention. High power cylindrical lamps 154, e.g. halogen lamps, are disposed in a case 156 and are provided with parabolic reflectors at the back thereof. The light from the lamps 154 is reflected by an original (not shown) mounted on an original image mount 155. The reflected light is projected onto an imaging sheet 150 by an exposure device comprising light reflecting members 157 and a light condensing member 163. The imaging sheet 150 is transferred from a feed roller 162 to a winding roller 159 through a light projecting station 164 where a latent image is formed on the imaging sheet 150. When the latent image is formed completely by the exposure device 157, 163, a pressure sufficient to collapse microcapsules (not shown) on the imaging sheet 150 is applied by means of pressure rollers 158, 158. At the pressure rollers 158, 158, an image-receiving sheet 200, which has been fed from a sheet feed cassette 60 and in contact with a roller 161, or alternatively from a cassette 70, is passed through conveyor rollers 165 so as to be placed upon the imaging sheet 150, thereby to have colouring precursors (not shown) in the imaging sheet 150 at places corresponding to the exposure of the imaging sheet 150 ooze out onto the image-receiving sheet 200. The image-receiving sheet 200 which has thus passed through the image- receiving station constituted by the pressure rollers 158, 158 is thereafter heated at a heating station 160 so as to advance rapidly a reaction between the colouring precursors and a developer (not shown) on the image-receiving sheet 200, thereby to assume the colours of the picture image in the said original. According to such a recording system, it becomes possible to have a picture element appear in a size equivalent to a microcapsule. Therefore, it becomes possible to print a colour picture image with a very high resolution.

As will be appreciated, when the apparatus of Figure 12 is modified for use with a sheet feeding device as shown in Figures 1-7 or Figures 10 and 11, the cassettes 60, 70 are replaced by a sheet feeding device as described above.

Although two suction discs 10A, 10B are disposed transversely, i.e. in the width direction, of the sheet 200, in the embodiments described above, the same action and effect can obviously be obtained by employing one or at least three suction discs, and furthermore these suction discs may be arranged longitudinally of the sheet 200, i.e. in the sheet moving direction, so long as a structure capable of causing curvature or bowing of the image-receiving sheets 200,201 is provided on the paper feeder. For example, the topmost image-receiving sheet 200 may be pushed down between the two suction discs.

The separation member 2A, 2B are shown as being disposed vertically with respect to the plane in which the image-receiving sheet 200 is transferred but they can be disposed in said plane. The same effect can be obtained by pushing down and curving the image-receiving sheets from the side opposite to the suction discs 10A, 10B.

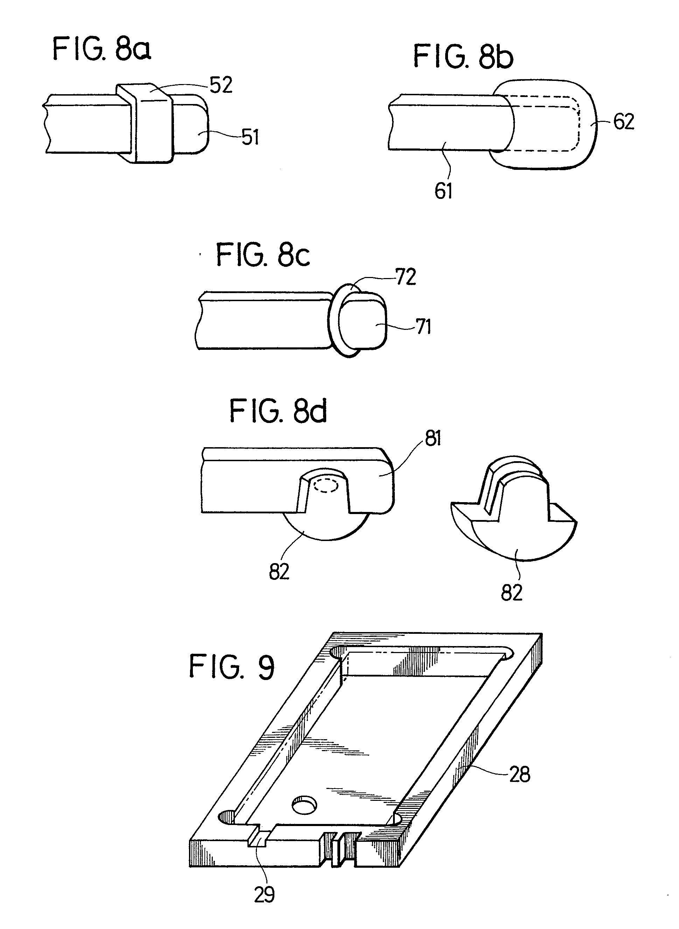

Figures 8a to 8d show perspective views of the principal portions of separation members which may be used in a sheet feeding device according to the present invention.

Figure 8a shows a perspective view of the principal portion of a separation member 51 with a belt-like protective member 52 wound at the tip of the separation member 51 and made of a metallic material or the like.

Figure 8b shows a perspective view of the principal portion of a separation member 61 with a protective member 62 which covers the tip of the separation member 61.

Figure 8c is a perspective view of the principal portion of a separation member 71 with a notch formed at part of the tip thereof and a ring-like protective member 72 disposed in this notch.

Figure 8d shows a perspective view of the principal portion of a separation member 81 having a recess or hole formed at the tip thereof, part of a protective member 82 being disposed in the hole or recess, and the protective member 82 extending from the separation member 81 only on the side thereof adjacent the image receiving sheet. The protective members 52, 62, 72, 82 may be made of fibres, paper, rubber, synthetic resin, sponge, and the like which have a relatively low surface hardness or ceramics, aluminium, brass, stainless steel, and the like which have a relatively high surface hardness but do not have any corrugations at the contact portion with the image receiving sheet. In other words, it is possible to use those materials and shapes which do not give rise to damage and scratches on the image forming agent. The tip itself of each separation member may be made of a rubber or a synthetic resin. If the protective member 52, 62, 72, 82 is disposed at part of the separation member for separating the overlapped image receiving sheets, a high quality image free from scratches or the like can always be obtained.

Although in the embodiments described above the paper return member 27 for returning the image-receiving sheet into the storage portion of the sheet tray 28 operates while following up the movement of the paper feeding device, it may be operated by another driving source without being affected by the paper feeding device so as to store the image receiving sheets in the sheet tray 28. The paper return member 27, moreover, need not be bent but may be straight and it may have any desired shape such as that of a round rod, a triangular pole, etc., so long as it can push the image receiving sheets into the sheet tray 28.

The sheet tray 28 used in the apparatus described above may have a shape such that when an image-receiving sheet is returned to the sheet tray 28 by the paper return member 27, the paper return member 27 does not come into contact with the tray 28. Figure 9 is a perspective view of such a sheet tray. A recess 29 is formed on one of the sides of the sheet tray 28, i.e. on the side thereof from which the sheets are loaded into the paper feeding device. When the rectangular cross section paper return member 27 is pushed by the pressure-contact roller shaft 41 and returns the image-receiving sheet into the sheet tray 28, the recess 29 has a shape such that contact between the sheet tray 28 and the paper return member 27 can be avoided.

In the embodiments described above, the suction force is generated by the pressure-contact force, but the same action can obviously be obtained by causing suction and peeling away of the image-receiving sheet 200 by connecting the suction disc or discs to a pump by way of a tube having a valve therein, the pump constituting a negative pressure source and being driven by the motor 1. Moreover, although in the embodiments described above, a suction disc is used as the means of effecting suction force, the same action can obviously be obtained by the use of members other than a suction disc that have the required suction force.

Furthermore, the same effect can be obtained in the case of ordinary paper not coated with the developing material.

In the embodiments described above, peeling off of the developing material can be prevented so that the image quality can be improved by minimizing the frictional force acting on the sheet surface. In these embodiments moreover, separation between the sheets is improved so as to minimize duplicate supply of the sheets and so produce a reliable paper feed operation.

## Claims

1. A sheet feeding device comprising housing means (28) for housing a stack of sheets (200,201); support means (21A, 21B) which carry at least one suction member (10A, 10B); and drive means (1,5,12,13,18,20A,20B) for moving the support means (21A,21B) between a sheet adherence position (Figure 6b), in which the suction member or members (10A, 10B) engage a portion of the topmost sheet (200) of the said stack and cause said portion to adhere by suction to the suction member or members (10A,10B), and a sheet release position (Figure 6f) in which the topmost sheet (200), which has been moved from the sheet adherence position (Figure 6b), is released from the suction member or members (10A,10B) so as to be delivered to a point of use characterised in that the support means (21A,21B) has at least one sheet contact portion (129) which is spaced from the suction member or members (10A, 10B) and contacts the said topmost sheet (200) in the sheet adherence position (Figure 6b), the drive means (1,5,12,13,18,20A,20B), after moving the support means (21A,21B) into the sheet adherence position, then moving the support means (21A,21B) into a sheet pivoting position (Figure 6c) in which the said portion of the topmost sheet is pivoted about the contact portion or portions (129) so as to be moved away from the remaining sheets in the stack, the support means (21A,21B) being thereafter moved into the sheet release position (Figure 6f).

2. A sheet feeding device as claimed in claim 1 characterised in that the drive means (1,5,11,13,18,20A, 20B), after moving the support means (21A, 21B) into the sheet pivoting position (Figure 6c) and prior to moving it into the sheet release position (Figure 6f), moves the support means (21A,21B) into a sheet separation position (Figure 6d) in which a sheet separation force is applied to effect separation from the said topmost sheet (200) of any surplus sheet (201) which temporarily adheres thereto.

3. A sheet feeding device as claimed in claim 2 characterised in that, in the sheet separation position (Figure 6d), the topmost sheet (200) is brought into engagement with one or more sheet separation members (2A,2B) which cause bowing of the said topmost sheet (200) so as to separate it from any surplus sheet (201).

4. A sheet feeding device as claimed in claim 3 characterised in that the sheet separation member or members (2A,2B) is or are carried by a rotatable arm or arms (23A,23B) which carry one roller (4) of a pair of feed rollers (3,4), means (6,11) being provided for rotating the said arm or arms (23A,23B) so as to bring the pair of rollers (3,4) together in the sheet release position so that the released sheet (200) can be fed forwardly thereby and to separate the rollers (3,4) in the other said positions.

5. A sheet feeding device as claimed in any of claims 2-4 characterised in that, in the sheet release position (Figure 6f), any said surplus sheet (201) is engaged by a sheet return member (27) so as to be moved back into the said stack.

6. A sheet feeding device as claimed in claim 5 when dependent upon claim 4 characterised in that, in the sheet release position (Figure 6f), the sheet return member (27) is moved by the said rotatable arm or arms (23A,23B) or by means (41) carried thereby so as to push any said surplus sheeet (201) back into the stack.

7. A sheet feeding device as claimed in any preceding claim characterised in that there are means (26) for directing a stream of air to the region in which the said topmost sheet is moved away from the remaining sheets in the stack so as to assist separation therebetween.

8. A sheet feeding device as claimed in any preceding claim in which the drive means (1,5,12,13,18,20A,20B) comprises a motor (1) whose drive is transmitted to the support means (21A,21B) by way of a slipping clutch (12).

9. A sheet feeding device as claimed in claim 8 when dependent upon claim 4, in which the said motor (1) also drives the said arm or arms (23A,23B) by way of a slipping clutch (11).

10. An image recording apparatus characterised in that it is provided with a sheet feeding device as claimed in any preceding claim.

11. A sheet feeding device comprising housing means (28) for housing a stack of sheets (200,201); sheet engagement means (10A,10B) engageable with the topmost sheet (200) of said stack; and drive means (1,5,12,13,18,20A,20B) for moving the sheet engagement means (10A,10B) so as to move the said topmost sheet (200) away from the remaining sheets in the stack and to a point of use characterised in that there are means (26) for directing a stream of air to the region in which the said topmost sheet is moved away from the remaining sheets in the stack so as to assist separation therebetween.

12. A sheet feeding device comprising housing means (28) for housing a stack of sheets (200,201); sheet engagement means (10A,10B) engageable with the topmost sheet (200) of said stack; and drive means (1,5,12,13,18,20A,20B) for moving the sheet engagement means (10A,10B) so as to move the said topmost sheet (200) away from the remaining sheets in the stack and to a point of use characterised in that there are means (2A,2B) which engage the topmost sheet (200) after it has been so moved away and before it is delivered to the point of use to cause bowing of the said topmost sheet (200) so as to separate it from any surplus sheet (201) adhering thereto.

13. An image forming apparatus for forming an image on an image recording sheet comprising:
illuminating means for illuminating an original;
exposure means for exposing said image recording sheet to light representative of the original;
feeding means for feeding said image recording sheet into said image forming apparatus, said feeding means having suction means disposed at one end of a member, the other end of said member contacting the surface of said image recording sheet, whereby said image recording sheet is sucked by said suction means and lifted up by rotating said suction means around the point of contact between the other end of said member and the surface of said image recording sheet; and
conveyor means for conveying said image recording sheet fed by said feeding means to an exposure station.

14. An image forming apparatus as claimed in claim 13, wherein said feeding means further comprises two rollers (3,4) for holding said image recording sheet between the rollers, at least one roller being disposed at one end of a rotating arm (23A,23B) which rotates around the other end of the arm, and rotating means for rotating said arm (23A,23B) so as to contact the one roller with the other roller.

15. An image forming apparatus as claimed in claim 14, wherein said rotating arm includes a paper return member disposed at one end of the rotating arm for pushing the image recording sheet placed on the upper surface of a sheet tray into the storage portion of the sheet tray.

16. An image forming apparatus for forming an image on an image recording sheet comprising:
illuminating means for illuminating an original;
exposure means for exposing said image recording sheet to light representative of the original;
feeding means for feeding said image recording sheet into said image forming apparatus;

blowing means for blowing the wind between the image receiving sheets and preventing double feeding of said image recording sheets; and

conveyor means for conveying said image recording sheet fed by said feeding means to an exposure station.

FIG. 1

# FIG. 2

EP 0 356 120 A2

FIG. 3

FIG. 4

FIG. 5

START

S1 — REVERSELY OPERATE MOTOR

S2 — ELAPSED TIME T1? — N

Y

S3 — NORMALLY OPERATE MOTOR

S4 — ELAPSED TIME T2? — N

Y

S8 — ERROR — N — S5 — SENSOR OUTPUT PRESENT?

Y

S6 — FEED SHEET BY A PREDETERMINED AMOUNT — N

Y

S7 — STOP MOTOR

END

FIG. 6a

FIG. 6b

FIG. 6c

FIG. 6d

FIG. 6e

FIG. 6f

# FIG. 7a

# FIG. 7b

FIG. 8a

52
51

FIG. 8b

62
61

FIG. 8c

72
71

FIG. 8d

81
82
82

FIG. 9

28
29

FIG. 10

# F I G. 11

# F I G. 12